# FASCICULE DE BREVET EUROPEEN

(11) **EP 0 469 965 B1**
(45) Date de publication et mention de la délivrance du brevet: **16.06.1993**
(21) Numéro de dépôt: 91402067.2
(22) Date de dépôt: 24.07.1991
(51) Int. Cl.: C08B 37/10

(54) **Procédé pour la préparation d'héparines calciques**
Verfahren zur Herstellung von Calciumheparinat
Process for preparing calcium heparinate

(30) Priorité: 27.07.1990 FR 9009653
(43) Date de publication de la demande: 05.02.1992
(73) Titulaire: ELF SANOFI, 75008 Paris (FR)
(72) Inventeur: Orozco, José-Luis, F-64000 Lons (FR); Dargelosse, Martine, F-64000 Pau (FR); Brannelec, Jean-François, F-76130 Mont Saint Aignan (FR); Langlois, Claude, F-92120 Montrouge (FR); Cornet, Philippe, F-94370 Noiseau (FR)
(74) Mandataire: Polus, Camille

(56) Documents cités:
- DE-A- 3 027 928
- FR-A- 2 292 504
- US-A- 4 009 088
- PATENT ABSTRACTS OF JAPAN vol. 13, no. 286 (C-613)(3634) 29 Juin 1989 & JP-A-1 080 408 ( TOSOH ) 27 Mars 1989

## Description

La présente invention concerne la préparation de sels d'héparine ou de produits dérivés de l'héparine tels que les fractions de bas poids moléculaire obtenues par extraction ou par dépolymérisation partielle. Le procédé qui fait l'objet de l'invention permet plus particulièrement de préparer le sel de calcium de l'héparine ou de ses dérivés.

L'héparine, connue pour son action anticoagulante du sang, est extraite sous forme de sel de sodium (héparine sodique) à partir de différents organes d'animaux tels que les poumons ou les intestins de boeuf ou de porc. L'utilisation thérapeutique de l'héparine sodique est effectuée par administration intraveineuse. Le brevet FR-2 225 149 (73 13581) décrit l'héparine calcique qui permet d'effectuer une thérapie héparinique par administration sous-cutanée, bien plus aisée.

Le procédé de fabrication du sel de calcium utilisé le plus souvent à l'échelle industrielle consiste à réaliser l'échange sodium-calcium en dissolvant l'héparine sodique dans une solution d'un sel de calcium. Bien que le calcium présente une plus grande affinité pour l'héparine que le sodium, un seul échange, même en excès de calcium ne suffit pas pour éliminer totalement le sodium qui, d'après les différentes pharmacopées, ne doit être présent qu'à moins de 0,1% dans le produit final. Il faut donc précipiter à l'alcool le mélange d'héparinate de sodium et de calcium obtenu lors du premier échange, puis redissoudre le précipité obtenu dans une nouvelle solution riche en calcium. Cette opération doit être renouvelée plusieurs fois avant que la teneur en sodium soit suffisamment basse. La précipitation en milieu alcoolique étant une opération lente (un à deux jours), ce procédé présente l'inconvénient d'être long et consommateur d'alcool et de main d'oeuvre. En outre, le rendement des précipitations n'étant pas de 100%, une partie de l'héparine, récupérée sous forme de sous-fractions dans les surnageants, doit subir d'autres opérations de purification.

D'autres méthodes ont été proposées pour réaliser l'échange de cations sur l'héparine :
- La dialyse statique de l'héparine sodique avec des sels de calcium qui est un procédé trop lent pour pouvoir être appliqué industriellement. L'utilisation d'un appareil de type hémodialyseur est décrite dans le brevet US-4 409 103.
- L'utilisation des résines échangeuses de cations, présente l'inconvénient de passer par l'héparine sous forme d'acide héparinique, notoirement instable car elle s'auto-hydrolyse rapidement (Brevet US-4.168.377).
- La diafiltration par une solution d'un sel de calcium est décrite dans le brevet US-4 409 103. Elle utilise des membranes d'ultrafiltration (non échangeuses d'ions). Les sels sont entraînés par le flux d'eau qui traverse les membranes sous l'action d'un gradient de pression. L'héparine est retenue par un effet de filtration, sa taille étant plus grande que celle des pores de la membrane. L'inconvénient de ce procédé est que, pour être suffisamment rapide, les membranes utilisées doivent présenter des perméabilités à l'eau importantes, donc des pores de gros diamètre- ce qui entraîne des pertes d'héparine à travers les membranes.

Dans une étude sur la solubilité de différents sels d'héparine et de chondroitine sulfate, ces produits ont été électrodialysés en utilisant des membranes de parchemin (E. Jorpes, Biochem. J. 1935, 29, 1817-1830). La méthode de dosage n'étant pas assez précise, l'auteur ne déctecte pas de perte d'activité avant et après électrodialyse. Néanmoins, il retrouve 1% de l'activité initiale perdue dans le compartiment anodique. En outre, la méthode décrite par E. Jorpes passe par l'héparine sous forme acide, instable.

La demande de brevet japonais publiée sous le numéro JP-01-149801 (chemical Abstract 112, 22607 m) décrit une méthode pour la préparation d'éther de cellulose modifiée, notamment des sels de la carboxyméthylcellulose, selon laquelle on soumet le sel de sodium à une électrodialyse à travers une membrane échangeuse d'ions ou une membrane d'ultrafiltration pour donner une forme acide et en traitant l'acide ainsi obtenu avec l'hydroxyde ou un sel du cation pour obtenir le sel désiré. Cette méthode aussi passe par l'intermédiaire de la forme acide, et lorsqu'elle est appliquée à l'héparine sodique, comporte une perte due à la dégradation de l'héparine sous forme acide.

On sait aussi que l'on peut séparer d'une solution différents ions métalliques et notamment les ions de sodium, calcium ou de fer (ferrique), en formant des complexes avec un agent chélatant tel que l'EDTA puis en soumettant les complexes ainsi obtenus à une électrodialyse (Patent Abstracts of Japan Vol 13 N° 286 (c-613) /3634/, 29.06.89; JP-1080408).

L'élecrodialyse a aussi été utilisée pour préparer en continu des solutions contenant différents sels minéraux de petit poids moléculaire, et notamment du sulfite de sodium, d'ammonium ou de magnésium à partir de sulfite de calcium (Brevet US-4.009.088).

On a maintenant trouvé qu'en utilisant une succession alternée de membranes perméables aux anions (MPA) et de membranes perméables aux cations (MPC) dans un appareil d'électrodialyse classique, ces membranes étant assemblées de façon à permettre la circulation de liquides entre deux membranes adjacentes, et en faisant circuler une solution du sel de sodium de l'héparine ou de fragments ou fractions d'héparine et une solution du sel de calcium utilisé pour l'échange d'ions, on obtient directement le sel de calcium correspondant sans passer par l'héparine sous forme acide.

On a également trouvé que la réaction est pratiquement quantitative et que, dans les solutions de saumure, telle que définie ci-dessous, et de rinçage des électrodes, on détecte moins de 0,1% de l'héparine initiale (ou de ses fractions ou fragments).

La présente invention concerne donc un procédé pour la préparation du sel de calcium de l'héparine ou de ses fragments ou fractions, caractérisé en ce que l'on fait circuler une solution de sel de sodium de l'héparine ou de ses fractions ou fragments et une solution d'un sel hydrosoluble de calcium dans un appareil d'électrodialyse comprenant des membranes perméables aux anions et des membranes perméables aux cations dans une succession alternée permettant la circulation des liquides.

Comme produits de départ, on utilise de préférence l'héparine sodique ou une de ses fractions obtenues par fractionnement ou par dépolymérisation, notamment la nadroparine connue aussi sous la nom de CY 216 et décrite dans le brevet US-4 686 288, sous forme de sel de sodium. Dans ce dernier cas, le procédé de la présente invention est particulièrement avantageux, car la masse moléculaire de la nadroparine, d'environ 2 000 à environ 8 000 daltons avec un pic qui se situe autour de 4 500 daltons, est nettement inférieure à celle de l'héparine; l'échange Na-Ca dans un procédé d'ultrafiltration ou de dialyse impliquerait des pertes importantes.

Comme produits de départ, on peut utiliser l'héparine sodique ou les fragments de l'héparine tels que la nadroparine sodique purifiés ou qui n'ont pas subi de purification finale et contiennent éventuellement des petites quantités d'éthanol, de sulfate de sodium ou de chlorure de sodium. Des essais comparatifs ont montré que de tels produits, lorsqu'ils sont contenus en petites quantités dans les produits de départ, n'influencent pas la qualité (pureté) de l'héparine calcique ou des fragments de l'héparine sous forme de sels de calcium obtenus avec le procédé de l'invention.

Tous ces produits de départ sont appelés ci-après "héparines" alors que les produits finals sont appelés "héparines calciques".

Le sel hydrosoluble de calcium utilisé de préférence est le chlorure.

Le procédé de la présente invention consiste notamment à utiliser des membranes perméables aux anions (MPA) et des membranes perméables aux cations (MPC) dans un appareil d'électrodialyse classique. Ces membranes échangeuses d'ions sont assemblées dans une succession alternée permettant la circulation de liquides entre deux membranes adjacentes. Le procédé consiste à faire circuler dans la succession des membranes une solution contenant le sel de sodium de l'héparine ou l'un de ses fractions ou fragments et un sel hydrosoluble contenant le cation calcium que l'on désire échanger avec le sodium (par exemple CaCl₂).

Les membranes ont une perméabilité telle qu'elles permettent le passage uniquement aux molécules ayant un poids moléculaire inférieur à environ 500 daltons.

A titre d'exemples non-limitatifs on peut citer les membranes ASAHI GLASS^{R}AMV/CSV ou les membranes Neo- Septa^{R}CM1 et AM1 (Tokayama Soda, fournisseur).

Le procédé selon l'invention est illustré sur les dessins annexés. Sur ces dessins :
- La figure 1 montre schématiquement le fonctionnement d'un électrodialyseur dans le procédé selon l'invention.
- La figure 2 montre schématiquement la migration des ions dans l'électrodialyseur dans le cas de la préparation de l'héparinate de calcium (héparine calcique).

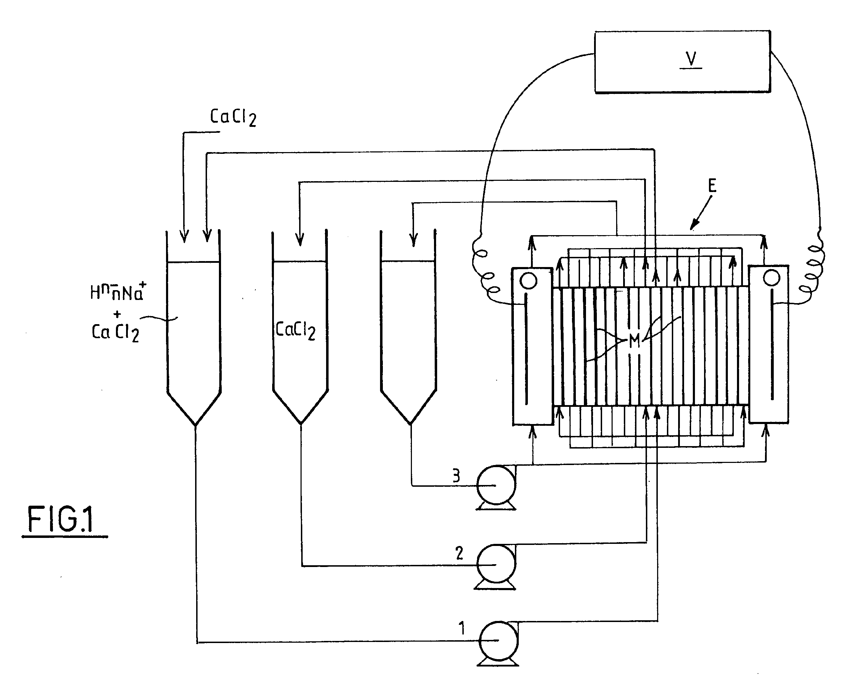

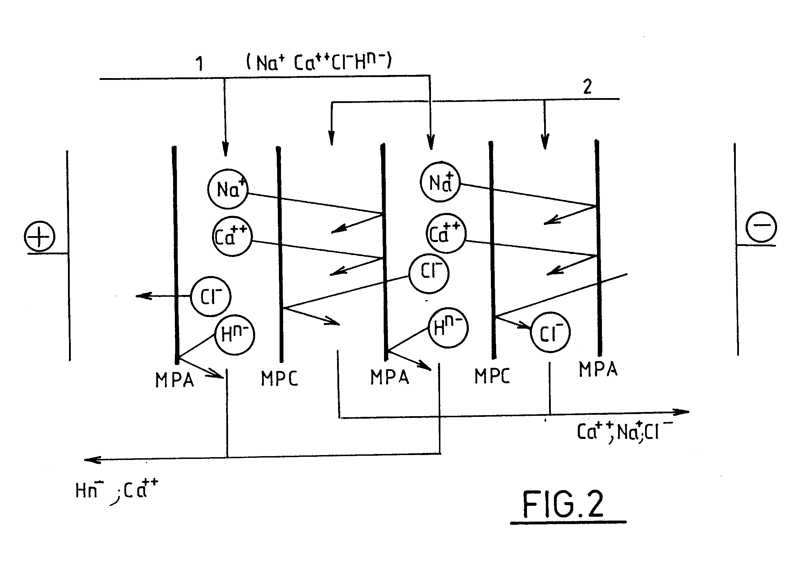

Dans un électrodialyseur E (Fig. 1) d'une part est introduite et donc circule une solution 1, ci-après appelée "solution produit", contenant une héparine sodique (Hⁿ⁻, nNa⁺) et un sel hydrosoluble de calcium, par exemple le chlorure de calcium et, d'autre part, circule une solution 2, ci-après appelée "saumure", qui au début ne contient qu'une petite quantité de sel (par exemple CaCl₂) pour assurer une conductivité et qui ensuite s'enrichit en sels (par exemple NaCl et CaCl₂) et qui est remplacée pendant l'électrodialyse par des ajouts du sel hydrosoluble de calcium (par exemple CaCl₂) dans la solution produit 1. L'électrodialyseur E comprend un ensemble de cellules, chacune constituée d'une MPA et d'une MPC. Le nombre des membranes M utilisées est de 30 à 60 et de préférence de 40 à 50, qui sont perméables à des molécules inférieures à environ 500 daltons. Les électrodes sont rinçées de façon connue, par exemple par une solution 3 de HCl (0,5%) ou de KCl (1%). La solution produit 1 circule dans un compartiment sur deux, alors que la saumure 2 circule dans les autres compartiments (voir figure 2).

Sous l'effet d'un champ électrique continu perpendiculaire aux membranes (fourni par une source V en continu) :
- Les ions Na⁺ traversent les MPC en direction de la cathode et sont confinés dans le compartiment saumure adjacent car ils y rencontrent une MPA;
- Les ions que l'on désire échanger avec Na⁺, en l'espèce Ca²⁺, traversent également les MPC, en direction de la cathode, et sont confinés dans le compartiment saumure adjacent, car leur migration est bloquée par la rencontre d'une MPA.
- Les anions du sel de calcium rajoutés pour déplacer le sodium traversent les MPA en direction de l'anode et sont confinés dans le compartiment saumure car ils y rencontrent une MPC.
- Les ions héparinate (Hⁿ⁻) migrent vers les MPA mais ne peuvent les traverser car leur masse moléculaire est trop importante. Les membranes d'électrodialyse ne sont en effet perméables qu'à des espèces de masse moléculaire inférieure à 500 environ. Les ions héparinate restent donc dans la solution produit 1.

Au fur et à mesure que les cations sodium et les cations calcium en excès sont transférés dans la saumure sous forme de sel de l'anion utilisé pour déplacer le sodium, de préférence sous forme de chlorure, on rajoute dans la solution produit le cation désiré le calcium en l'espèce, de manière à déplacer totalement le sodium.

Il suffit alors de récupérer la solution produit en vidangeant le circuit produit et de rajouter de l'éthanol (ou un autre précipitant de l'héparine) dans cette solution pour faire précipiter le sel de calcium de l'héparine ou d'une de ses fractions.

La tension qui est appliquée aux électrodes peut aller de 2 à 38 volt/cm, de préférence de 5 à 30 volt/cm. Le procédé est conduit à une température de 0 à 80°C, de préférence à la température ambiante.

Le procédé de la présente invention est de réalisation très simple, il est très rapide et donne des sels de calcium très purs, avec une teneur en sodium inférieur à 0,1% et avec un très bon rendement en activité biologique.

De plus, par rapport à une simple électrodialyse, qui est un procédé de dessalage, le procédé de la présente invention réalise un échange direct de cations sur une macromolécule anionique. D'autre part, les macro-anions sont connus pour colmater la surface des membranes d'électrodialyse; de façon surprenante, moyennant un simple rinçage à l'eau entre deux essais, on n'a constaté aucune baisse des performances des membranes, comme on aurait pu s'y attendre au départ.

Par rapport aux procédés connus, le procédé de la présente invention comporte des améliorations considérables, notamment :
- Par rapport à l'ultrafiltration ou la dialyse, le procédé de l'invention allie rapidité et faibles pertes, ce qui est difficile à concilier par les deux méthodes sus-mentionnées;
- Par rapport aux précipitations successives, on diminue considérablement la durée du traitement, le nombre de manipulations et la consommation de précipitant.

Les exemples suivants illustrent l'invention.

Le matériel utilisé dans ces exemples est le suivant :
- Electrodialyseur SRTI modèle P1
- Membranes ASAHI GLASS AMV/CSV (20 cellules de 69 cm²) (une cellule étant constituée d'une MPA et d'une MPC). L'électrodialyseur est donc constitué d'un total de 41 membranes.

Les conditions opératoires sont les suivantes :
- Tension appliquée aux électrodes : 25 volts pour l'exemple 1 et 30 volts pour l'exemple 2.
- Température : ambiante.

### EXEMPLE 1 - Fabrication d'héparine calcique

### PREPARATION A EN PRESENCE DES IMPURETES

115 g d'héparine sodique (soit 20,6 x 10⁶ unités selon la Pharmacopée Européenne, Ed. 1990, page 333, monographie Héparinate de Sodium - titrage : V.2.2.6.) sont mis en solution dans 900 g d'eau. On ajoute 15 g d'éthanol, 1,2 g de Na₂SO₄ et 170 mg de NaCl. Cette solution est soumise à une électrodialyse, les ions sont transférés progressivement dans une solution saumure ayant la composition initiale suivante : CaCl₂ : 5 g/H₂O : 1 kg. Les électrodes de l'appareil sont rincées avec 1,2 litre de KCl à 1% qui recircule en continu. Des ajouts de 100 g d'une solution de CaCl₂ à 38,5% sont effectués dans le produit à 0, 30 et 90 minutes. On remplace la saumure enrichie en sels par 1 kg de CaCl₂ à 0,5% aux temps 30 et 90 minutes. Au bout de 150 minutes on récupère la solution produit par vidange. L'héparine est alors précipitée à l'éthanol, broyée, lavée à l'alcool puis séchée à l'étuve sous vide. On récupère 120 g d'un produit en poudre ayant les caractéristiques suivantes :
- activité biologique : 20,6 x 10⁶ unités (rendement 100%)
- teneur en sodium : 0,03%
- teneur en calcium : 9,2 %

Par dosage au bleu de toluidine (J.P. DUCLOS HEPARINE, Ed. Masson, p. 285) on n'a détecté que 0,6% de l'héparine initiale dans les solutions saumure et de rinçage des électrodes. Ceci prouve bien la quasi totale imperméabilité des membranes à l'héparine.

### PREPARATION B EN UTILISANT UNE HEPARINE SODIQUE PURE

115 g d'héparine sodique (soit 20,6 x 10⁶ unités selon la Pharmacopée Européenne, Ed. 1990, page 333, monographie Héparinate de sodium - titrage : V.2.2.6.) sont mis en solution dans 900 g d'eau. Cette solution est soumise à une électrodialyse, les ions sont transférés progressivement dans une solution saumure ayant la composition initiale suivante : CaCl₂ : 5 g; H₂O : 1 kg. Les électrodes de l'appareil sont rincées avec 1,2 litre de KCl à 1%, qui recircule en continu. Des ajouts de 100 g d'une solution de CaCl₂ à 38,5% sont effectués dans le produit à 0, 30 et 90 minutes. On remplace la saumure enrichie en sels par 1 kg de CaCl₂ à 0,5% aux temps 30 et 90 minutes. Au bout de 150 minutes, on récupère la solution produit par vidange. L'héparine est alors précipitée à l'éthanol, broyée, lavée à l'alcool puis séchée à l'étuve sous vide. On récupère 120 g d'un produit en poudre ayant les caractéristiques suivantes :
- activité biologique:20,6x10⁶ unités (Rendement 100%)
- teneur en sodium :0,03 %
- teneur en calcium :9,2 %

### EXEMPLE 2 : Fabrication du sel calcique de la nadroparine

220 g de nadroparine sodique (soit 62,0x10⁶ unités anti-Xa selon Path. Biol. 1988, 36, 335-337), obtenu comme décrit dans l'exemple 1 du brevet US-4 686 288, sont mis en solution dans 1860 g d'eau. Cette solution est divisée en deux parties égales, et chaque partie est soumise à une électrodialyse (l'appareil ne peut traiter qu'un litre par lot) les ions sont progressivement transférés dans une solution saumure ayant la composition initiale suivante : CaCl₂ : 5 g/H₂O : 1 kg. Les électrodes de l'appareil sont rincées en continu avec 1,2 litres de HCl 0,5% qui recirculent en continu. Des ajouts de 100 g d'une solution de CaCl₂ à 38,3% sont effectués dans le produit à 0, 26 et 47 minutes pour l'électrodialyse du premier lot et 0, 37 et 77 minutes pour l'électrodialyse du second lot. La saumure est remplacée par 1 litre de CaCl₂ à 0,5% à chaque ajout de CaCl₂ dans la solution. Le pH de la solution est maintenu entre 6 et 7 par des ajouts de Ca(OH)₂. Au bout de 83 minutes pour la première électrodialyse et 127 minutes pour la seconde, on récupère le produit par vidange et rinçage du circuit produit à l'eau distillée. La nadroparine calcique est alors précipitée à l'éthanol, broyée lavée à l'éthanol et séchée à l'étuve sous vide. On récupère 220 g de poudre ayant les caractéristiques suivantes :
- activité biologique : 62,7 x 10⁶ unités anti-Xa (rendement approximativement de 100%)
- teneur en sodium : 0,08%
- teneur en calcium : 9,8 %

Par essai de précipitation à l'éthanol on estime à moins de 0,01% la quantité de nadroparine qui est perdue à travers les membranes.

## Revendications

1. Procédé pour la préparation du sel de calcium de l'héparine ou de ses fragments ou fractions, caractérisé en ce que l'on fait circuler une solution de sel de sodium de l'héparine ou de ses fractions ou fragments et une solution d'un sel hydrosoluble de calcium dans un appareil d'électrodialyse comprenant des membranes perméables aux anions et permettant uniquement le passage aux molécules ayant un poids moléculaire inférieur à 500 daltons, et des membranes perméables aux cations, dans une succession alternée permettant la circulation des liquides, et que l'électrodialyse est conduite sous une tension de 2 à 38 volt/cm.

2. Procédé selon la revendication 1, caractérisé en ce que l'électrodialyse est conduite sous une tension de 5 à 30 volt/cm.

3. Procédé selon l'une quelconque des revendications 1 et 2, caractérisé en ce que comme sel de calcium on utilise le chlorure.

4. Procédé selon l'un quelconque des revendications 1 à 3, caractérisé en ce que l'électrodialyse est conduite à une température de 0 à 80°C.

5. Procédé selon la revendication 4, caractérisé en ce que l'électrodialyse est conduite à la température ambiante.

## Patentansprüche

1. Verfahren zur Herstellung des Calciumsalzes von Heparin oder seiner Fragmente oder Fraktionen,
**dadurch gekennzeichnet,**
daß man eine Lösung des Natriumsalzes von Heparin oder seiner Fraktionen oder Fragmente und eine Lösung eines wasserlöslichen Calciumsalzes in einem Elektrodialyseapparat umwälzt, der für Anionen permeable Membranen, die nur den Durchgang von Molekülen mit einer Molekülmasse unter 500 Dalton erlauben, und für Kationen permeable Membranen in alternierender, die Umwälzung der Flüssigkeiten erlaubender Abfolge enthält, und daß die Elektrodialyse bei einer Spannung von 2 bis 38 Volt/cm durchgeführt wird.

2. Verfahren nach Anspruch 1,
dadurch gekennzeichnet,
daß die Elektrodialyse bei einer Spannung von 5 bis 30 Volt/cm durchgeführt wird.

3. Verfahren nach Anspruch 1 oder 2,
dadurch gekennzeichnet,
daß man als Calciumsalz das Chlorid verwendet.

4. Verfahren nach einem der Ansprüche 1 bis 3,
dadurch gekennzeichnet,
daß die Elektrodialyse bei einer Temperatur von 0 bis 80 °C durchgeführt wird.

5. Verfahren nach Anspruch 4,
dadurch gekennzeichnet,
daß die Elektrodialyse bei Umgebungstemperatur durchgeführt wird.

## Claims

1. Process for the preparation of the calcium salt of heparin or of its fragments or fractions, characterised in that a solution of the sodium salt of heparin or of its fractions or fragments and a solution of a water-soluble salt of calcium is circulated through an electrodialysis apparatus comprising anion-permeable membranes which allow only molecules having a molecular weight of less than 500 Daltons to pass through, and cation-permeable membranes, in an alternating sequence allowing the circulation of the liquids, and in that the electrodialysis is carried out at a voltage of 2 to 38 volts/cm.

2. Process according to Claim 1, characterised in that electrodialysis is carried out at a voltage of 5 to 30 volts/cm.

3. Process according to any one of Claims 1 to 2, characterised in that the calcium salt used is the chloride.

4. Process according to any one of Claims 1 to 3, characterised in that the electrodialysis is carried out at a temperature of 0 to 80°C.

5. Process according to Claim 4, characterised in that electrodialysis is carried out at room temperature.
